Europäisches Patentamt

European Patent Office

Office européen des brevets

(19)

(11) **EP 0 494 556 B1**

(12) **FASCICULE DE BREVET EUROPEEN**

(45) Date de publication et mention
de la délivrance du brevet:
**06.03.1996 Bulletin 1996/10**

(51) Int Cl.⁶: **G05B 19/418**

(21) Numéro de dépôt: **91403350.1**

(22) Date de dépôt: **10.12.1991**

(54) **Dispositif de repositionnement de flans**

Verfahren zur Herorientierung von Matrizen

System for repositioning of moulds

(84) Etats contractants désignés:
**DE GB IT SE**

(30) Priorité: **11.12.1990 FR 9015793**

(43) Date de publication de la demande:
**15.07.1992 Bulletin 1992/29**

(73) Titulaires:
- **AUTOMOBILES PEUGEOT
F-75116 Paris (FR)**
- **AUTOMOBILES CITROEN
F-92200 Neuilly sur Seine (FR)**

(72) Inventeur: **Brolon, Nadine
F-92290 Chatenay Malabry (FR)**

(74) Mandataire: **Boivin, Claude
9, rue Edouard-Charton
F-78000 Versailles (FR)**

(56) Documents cités:
FR-A- 2 602 623          US-A- 4 287 459
US-A- 4 613 803          US-A- 4 641 828
US-A- 4 773 523          US-A- 4 799 581
US-E- 30 016

- MICROPROCESSORS AND MICROSYSTEMS
vol. 8, no. 5, Juin 1987, LONDON, GB pages 245
- 248; RICHARD WESTON: 'Robot workplaces.'
- E.K. TEOH ET AL. 'An intelligent robotic vision
system-autpmatic keyboard assembly.' 25
Août 1987 , IEEE KOREA SECTION,
PROCEEDINGS TENCON 87 , SINGAPORE,
REPUBLIC OF SINGAPORE

# Description

L'invention concerne un dispositif de repositionnement de flans destiné à équiper un robot d'alimentation de presse tel que défini dans le préambule de la revendication 1.

Un tel robot saisit, à l'aide d'un préhenseur à ventouses, un flan sur une pile et le dépose sur le chargeur de la presse. Cette opération doit être effectuée à la cadence de fonctionnement de la presse qui peut être d'un coup toutes les quatre secondes.

Les flans de la pile sont disposés de manière imprécise, plus ou moins décalés les uns par rapport aux autres; aussi faut-il les repositionner pour qu'ils se présentent correctement à la dépose sur le chargeur.

Actuellement le repositionnement est manuel; il précède la saisie par le préhenseur à ventouse du chargeur de presse.

Le document D1 = MICROPROCESSORS AND MICROSYSTEMS, vol.8, N° 5, Juin 1987, Londres, GB, , pages 245-248; RICHARD WESTON : "Robot workplace" décrit un dispositif de positionnemen t d'un robot comportant une caméra qui est placée devant une bande transporteuse supportant les pièces à saisir par le robot et qui assure l'orientation du robot en fonction de l'orientation de la pièce de façon qu'il saisisse correctement cette pièce. Mais il ne s'agit pas d'un dispositif de repositionnement de pièces puisque la caméra est située non pas sur le trajet du préhenseur du robot mais en amont de ce robot.

Le dispositif selon l'invention permet d'assurer le repositionnement des flans automatiquement pendant leur transport par le robot de la pile au poste de dépose.

Ce dispositif est caractérisé comme précisé dans la partie caractérisante de la revendication 1.

Pour donner au robot les instructions de repositionnement, le micro-ordinateur peut comparer l'image saisie par la caméra matricielle avec une image mise en mémoire et correspondant à la position théorique du flan au point d'acquisition des informations. Cette comparaison peut se faire en déterminant les angles que font avec une direction fixe deux bords adjacents du flan ainsi que les coordonnées de leur point d'intersection M, et en mesurant leur différence avec les valeurs théoriques.

On a décrit ci-après, à titre d'exemple non limitatif, un mode de réalisation du dispositif selon l'invention, avec référence au dessin annexé dans lequel :

La Figure 1 est une vue en plan schématique du dispositif;

La Figure 2 en est un schéma de fonctionnement;

La Figure 3 montre comment le calcul du décalage est effectué.

Au dessin, on voit un robot 1 qui comporte un préhenseur à ventouses 2 et peut se déplacer en pivotant autour d'un axe 3 devant l'une de deux piles de flans 4a et 4b et devant un chargeur de presse d'emboutissage 5, de façon à prélever un flan à l'une des piles 4a et 4b et l'amener au chargeur 5. Sur le trajet des flans, de part et d'autre du chargeur 5, se trouvent deux capteurs 6a et 6b disposés en amont du chargeur 5, correspondant chacun à l'un des sens de pivotement du robot 1 et propres à déclencher deux caméras matricielles 7a et 7b capables de prendre une image au millième de seconde. Les caméras 7a et 7b sont connectées à un micro-ordinateur 8 qui est équipé de moyens de traitement d'images et commande le robot 1; ce micro-ordinateur compare l'image fournie par la caméra 7a ou 7b avec une image mise en mémoire et correspondant à la position théorique du flan devant la caméra et donne des instructions de repositionnement au robot 1.

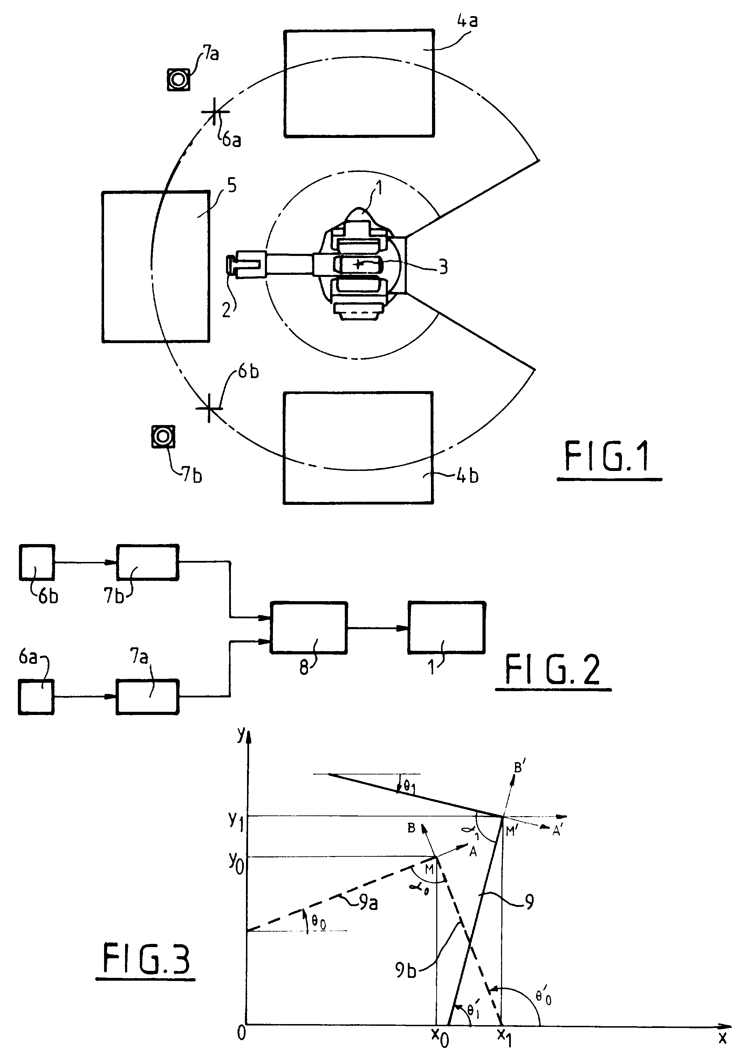

La Figure 3 représente un flan 9 en traits interrompus dans la position qu'il devrait occuper lors de son passage devant la caméra 7a ou 7b et en traits pleins sa position réelle devant cette caméra. Deux arêtes adjacentes 9a et 9b du flan font entre elles un angle $\alpha_0$ et en réalité un angle $\alpha1$ qui peut être légèrement différent de l'angle $\alpha_0$. L'arête 9a fait avec un axe de coordonnées 0X un angle théorique $\theta_0$ et en réalité un angle $\theta1$; de son côté, l'arête 9b fait un angle théorique $\theta'_0$ avec cet axe de coordonnées 0X et en réalité un angle $\theta'1$. Les deux arêtes se coupent en M′.

L'ordinateur 8 commande le robot 1 d'une part pour lui faire subir un déplacement M′M en translation et d'autre part un déplacement angulaire. Comme l'angle $\alpha1$ n'est pas rigoureusement égal à $\alpha_0$, la différence $\theta_1$ - $\theta_0$ n'est pas rigoureusement identique à $\theta'_1$ - $\theta'_0$ Par suite, l'ordinateur fait subir au robot un déplacement angulaire moyen égal à

$$\frac{(\theta1 - \theta_0 + (\theta'1 - \theta'_0)}{2}$$

En fonctionnement, le robot prend un flan en aveugle sur la pile 4a ou 4b et le fait passer à la volée devant la caméra 7a ou 7b, son passage étant détecté par le capteur 6a ou 6b. L'information recueillie par la caméra est retransmise au micro-ordinateur 8. Le robot continue sa trajectoire vers le chargeur 5; pendant ce mouvement, il se décale en fonction des informations recueillies de façon à poser correctement le flan sur le chargeur. La présence de deux piles de flans associée chacune à une caméra 7a ou 7b et à un capteur 6a ou 6b permet de changer les piles en temps masqué, en inversant le sens de pivotement du robot autour de l'axe 3.

# Revendications

1. Dispositif de repositionnement de flans destiné à équiper un robot d'alimentation de presse dont le préhenseur (2) est apte à saisir un flan sur une pile et à le transporter à un poste de dépose (5) en suivant un parcours prédéterminé,

caractérisé en ce qu'il comprend une caméra matricielle (7a ou 7b) disposée à poste fixe en regard du parcours du flan et destinée à prendre une image du flan lorsque ce dernier passe devant elle, un micro-ordinateur (8) connecté à la caméra (7a ou 7b) et équipé de moyens de traitement d'images et propre à donner au robot, à la volée, des instructions de repositionnement, et un capteur (6a ou 6b) disposé sur le parcours du flan, en amont du poste de dépose (5) pour détecter le passage du flan et propre à donner une instruction de déclenchement à la caméra matricielle (7a ou 7b).

2. Dispositif selon la revendication 1,
caractérisé en ce que le micro-ordinateur (8) comporte des moyens pour comparer l'image saisie par la caméra matricielle (7a ou 7b) avec une image mise en mémoire et correspondant à la position théorique du flan au point d'acquisition des informations.

3. Dispositif selon la revendication 2,
caractérisé en ce que , pour faire la comparaison de l'image théorique et de l'image réelle, le micro-ordinateur (8) comporte des moyens pour déterminer les angles qui font avec une direction fixe deux bords adjacents (9a et 9b) du flan (9) ainsi que les coordonnées de leur point d'intersection $\underline{M}$ et pour mesurer leurs différences avec leurs valeurs théoriques.

4. Dispositif selon l'une quelconque des revendications précédentes,
caractérisé en ce qu'il comporte deux caméras matricielles (7a et 7b) disposées de part et d'autre du poste de dépose (5), entre ce poste de dépose et une piste de flans (4a ou 4b).

**Patentansprüche**

1. Vorrichtung zum Repositionieren von Zuschnitten, die zur Beschickung eines Pressen-Zuführungsroboters bestimmt sind, dessen Greifer (2) dazu geeignet ist, einen Zuschnitt von einem Stapel aufzunehmen und ihn entlang einer vorgegebenen Bahn zu einer Ablagestelle zu transportieren, dadurch gekennzeichnet, daß sie eine an einer in bezug auf die Bahn des Zuschnitts festen Stelle angeordnete Matrizenkamera (7a oder 7b) aufweist, die dazu bestimmt ist, ein Bild des Zuschnitts aufzunehmen, wenn dieser letztere an ihr vorbeiläuft, sowie einen Mikrocomputer (8) der mit der Kamera (7a oder 7b) verbunden und mit Mitteln zur Verarbeitung von Bildern versehen und dazu geeignet ist, dem Roboter ohne Verzögerung Repositionierungsbefehle zuzuführen, und einen Meßfühler (6a oder 6b), der an der Bahn des Zuschnitts stromaufwärts vor der Ablagestelle (5) zur Erfassung des Vorbeigangs des Zuschnitts angeordnet und dazu geeignet ist, der Matrizenkamera (7a oder 7b) einen Auslösebefehl zuzuführen.

2. Vorrichtung nach Anspruch 1, dadurch gekennzeichnet, daß der Mikrocomputer (8) Mittel zum Vergleichen des von der Matrizenkamera (7a oder 7b) aufgenommenen Bildes mit einem eingespeicherten Bild aufweist, das der theoretischen Position des Zuschnitts am Erfassungspunkt der Informationen entspricht.

3. Vorichtung nach Anspruch 2, dadurch gekennzeichnet, daß zur Durchführung des Vergleichs des theoretischen Bildes mit dem realen Bild der Mikrocomputer (8) Mittel zum Bestimmen der Winkel, die zwei aneinander anschließende Kanten (9a und 9b) des Zuschnitts (9) mit einer festen Richtung einschließen, und ebenso der Koordinaten ihres Schnittpunkts (M) und zum Messen ihrer Differenzen zu ihren theoretischen Werten aufweist.

4. Vorrichtung nach einem der vorhergehenden Ansprüche, dadurch gekennzeichnet, daß sie zwei Matrizenkameras (7a und 7b) aufweist, die zu beiden Seiten der Ablagestelle (5) zwischen dieser Ablagestelle und einem Stapel (4a oder 4b) von Zuschnitten angeordnet sind.

**Claims**

1. Device for repositioning blanks and intended to equip a press feeding robot whose gripping device (2) is able to pick up a blank from a pile and transport it to a placing station (5) by following a predetermined covered distance, wherein it includes a matrix camera (7a or 7b) disposed at a fixed station opposite the passage of the blank and intended to capture an image of the blank when the latter moves in front of it, a microcomputer (8) connected to the camera (7a or 7b) and equipped with image processing means and able to instantly provide the robot with the repositioning instructions, and a sensor (6a or 6b) disposed on the path of the blank upstream of the placing station (5) so as to detect the passage of the blank and able to give the matrix camera (7a or 7b) a triggering instruction.

2. Device according to claim 1, wherein the microcomputer (8) comprises means to compare the image picked up by the matrix camera (7a or 7b) with a stored image and corresponding to the theoretical position of the blank at the information acquisition point.

3. Device according to claim 2, wherein, so as to compare the theoretical image and the real image, the computer (8) comprises means to determine the angles made by two adjacent edges (9a and 9b) of the blank (9) with a fixed direction, as well as the coordinates of their point of intersection M and so as to measure their differences with their theoretical values.

4. Device according to any one of the preceding claims, wherein it comprises two matrix cameras (7a and 7b) disposed on both sides of the placing station (5) between this placing station and a track of blanks (4a or 4b).

$\underline{FIG.1}$

$\underline{FIG.2}$

$\underline{FIG.3}$